# EUROPEAN PATENT APPLICATION

(11) **EP 2 105 109 A1**
(43) Date of publication of application: **30.09.2009**
(21) Application number: 07866372.1
(22) Date of filing: 19.12.2007
(51) Int. Cl.: A61C 5/04

(54) **ENDODONTIC OBTURATOR**

(30) Priority: 22.12.2006 ES 200603247
(71) Applicant: Florit De Marti, Luis, 08012 Barcelona (ES)
(72) Inventor: Florit De Marti, Luis, 08012 Barcelona (ES)
(74) Representative: Civanto Villar, Alicia
(86) International application number: PCT/ES2007/000742
(87) International publication number: WO 2008/077975

(57) **Abstract**

An endodontic obturator comprised of an obturation needle (1, 11) and a handle (2, 12) for the positioning of the obturator, and **characterised by** the fact that said obturation needle (1, 11) and said handle (2, 12) are joined by means of a rod (4, 14) that is breakable by turning it along its longitudinal axis. When the obturator is a central obturator, said obturation needle (1) advantageously comprises a locating head (3) located in the end of the obturation needle (1) in contact with said rod (4). It permits removing the handle easily, by simply turning it a few times.

## Description

This invention refers to an endodontic obturator for root canals, whose function is to seal the root canal after having emptied the dental root.

### BACKGROUND OF THE INVENTION

Endodontic obturators are used to seal the root canal to impede the passage of germs or food that could deteriorate the previously devitalized root. In addition to these obturators, cement is used in order to achieve the absolute seal of the root canal.

The traditional endodontic obturators are formed by an obturation needle, which is placed to a predetermined depth, after taking one or several radiographs or other electronic measuring methods of the length of the root. This traditional system presents the inconvenience of the obturator being uncomfortable and slow to position. Furthermore it may or may not include indications of the method used. The oldest ones do not have any indications. When they have depth indications, they are positioned in the area that makes the calculation of the depth to which it must be placed difficult.

Another endodontic obturator system is that known on the market with the trade name of Thermafil®. This obturator is also comprised of an obturation needle and a handle provided with an indicator, so that once the obturation needle is positioned at the desired depth, it separates at the joint from the indication, removing the indicator and the handle. The inconvenience that this obturation system presents is that it is necessary to heat the obturator before it is positioned in order to soften it. It is softened with heat for a better adaptation of the melted or softened gutta percha to the canal and so it does not break or permit breakage, which might occur when applying pressure on the handle. It is also difficult to remove in case an infection should occur, since the indicator and the handle are removed after positioning the obturation needle.

Another obturation system is also known, identified on the market with the trade name of GuttaFlow®. This obturator is comprised by a point that is coupled to a capsule with a dose of obturator filler. The inconvenience that this obturator presents is that it is necessary to use a vibrator in order to mix the components of the capsule and a pistol for the application of the obturator. It is also difficult to remove in case of infection as well as being difficult to control the location of the paste placed with the pistol and the cannula within the root canal.

Document US 2005/0069836 refers to a dental filler material, in which different endodontic obturations are represented. The obturator is comprised by a handle, an obturation needle and a sliding support placed between the needle and the handle.

This sliding support serves as an indicator of the depth of the canal and helps to keep the obturator in position. The obturator also includes filler material placed on the needle. However, none of the obturators represented include a locating head that is joined to the handle through a breakable rod. In one of the realisations, it indicates that the obturator breaks, but not that there is a rod especially designed to break.

The endodontic obturator described of in Patent US-6,010,335 is comprised by a handle and a needle. The handle can be fixed in a separable way to the needle. However, this document does not describe any locating head or any breakable rod. Document DE 20 2005 018 748 UI describes an endodontic obturator that is comprised of a needle separated in two parts of different thickness, with the upper part provided with a ruler. This obturator does not include any locating head.

### DESCRIPTION OF THE INVENTION

With the endodontic obturator of this invention, the aforementioned inconveniences are resolved, presenting other advantages that will be described. The endodontic obturator of this invention is comprised of an obturation needle and a handle for positioning the obturator, and is characterised by the fact that this obturation needed and this handle are joined by a rod that is breakable turning it on its longitudinal axis.

Advantageously, this obturation needle is comprised of a locating head placed on the end of the obturation needle in contact with said rod. Advantageously, this handle and rod comprise a ruler.

According to the preferred realisation, the endodontic obturator is of polyamide, comprising a load of titanium dioxide and barium sulphate.

With the endodontic obturator of this invention, the following advantages are obtained:
- the handle can be removed easily by simply turning it several times, causing the rod to break;
- it can be removed much more easily in case an infection should occur, thanks to the presence of this locating head, which will always remain joined to the obturation needle:

- its placement is more comfortable and faster thanks to the presence of the aforementioned ruler on the handle and the rod;
- it is biologically accepted by the body without producing an inflammatory reaction or rejection;
- it is slightly elastic and permits being inserted in curved canals;
- it is chemically inert in the human body and does not contain allergens;
- titanium dioxide is a very biologically compatible material and in the event of contact with soft tissue, by getting out of the root by error, there is no reason for it to produce any pathological reaction in the tissue surrounding the root.

Furthermore, by being of polyamide it can be sterilised in autoclave at 130° C which cannot be done with any of the existing methods since by being composed of gutta percha they cannot go over 60° C and, therefore, they can only be sterilised with chemical methods with the inconveniences that this may entail such as: difficult bagging, for its storage, maintaining the sterility and the verification of the complete sterilisation.

### BRIEF DESCRIPTION OF THE DRAWINGS

For the better understanding of all that has been expressed, some drawing are attached in which two realisations are represented in outline form as an example but without being limited to them.
Figure 1 is a schematic view of the lengthwise view of a central endodontic obturator of this inventions, according to the first realisation; and
Figure 2 is a schematic lengthwise view of the lateral endodontic obturator of this invention, which complements the central obturator.

### DESCRIPTION OF PREFERRED REALISATIONS

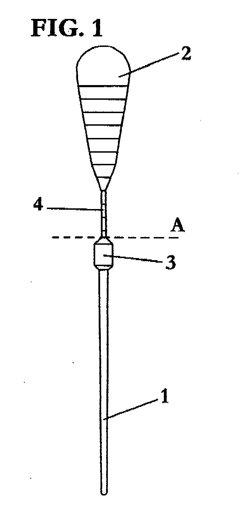

As can be seen in Figure 1 which shows a central obturator, the obturator of this invention includes an obturation needle (1) that is inserted in the root canal that must be obturated, a handle (2) for the positioning of said obturator, a locating head (3) placed between said handle (2) and said needle (1), and a connecting rod (4) that connects said locating head (3) to said handle (2).

This rod (4) is breakable by turning the handle (2), with the rod (4) breaking at the position indicated by dotted line A in the figure.

In order to facilitate the correct placement of the obturator, the handle (2) and the rod (4) have a millimetre rule.

The obturation needle (1) is slightly cone-shaped, for example with a 4° slope in its entire length and presents a circular cross section. Evidently, the thickness and the length of this obturation needle (1) are variable depending on the requirements for carrying out the obturation. For example, the thickness can vary from 0.20 mm and 0.80 mm, and a length between 12 mm and 18 mm.

The locating head (3) is substantially cylindrical and, for example, has a diameter of 1.3 mm and a length of 2.5 mm.

The obturator of this invention is preferably of polyamide 6 with a load of titanium dioxide and of barium sulphate, for example, 20% of titanium dioxide and 20% barium sulphate and 1% colouring, such as ferric oxide.

It is known that, in order to use the obturator, in the first place it is necessary to determine the appropriate dimension of the obturator that must be used and to determine the depth to which the obturator must be placed. This measurement is made by means of radiographs or a similar system.

Once the proper obturator is chosen and the depth to which it must be placed is determined, the obturation needle is introduced (1) quickly and simply thanks to the presence of the handle (2) with the millimetre rule. Before its introduction, the point of the needle (1) is filled with cement, or else the root cement is inserted with a lentulo spiral. By turning the lentulo spiral slowly, the canal is sealed, or else the cement can also be inserted with the same central needle described above.

When the needle (1) has been placed in the desired position, the handle (2) is pressed and turned three to five times, separating the handle (2) and the rod (4) from the rest of the obturator, that is, from the needle (1) and the head (3). This is to say, the breakage is done once it has been assured that the needle (1) is in the correct position, without the needle (1) going through the tip of the root.

Evidently, it is not necessary to heat the obturator of this invention or to use special tools, as occurs with the obturators of the previous technique, as indicated above.

In addition, since the head (3) is always joined to the needle (1), its removal in case of infection is made easier.

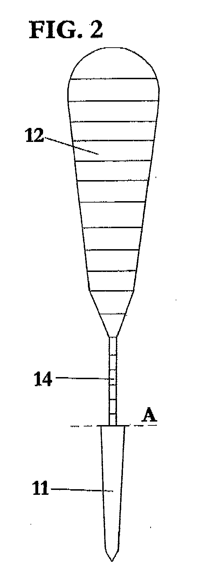

Figure 2 shows a lateral obturator, which complements the central obturator shown in Figure 1, laterally sealing the canal. It should be pointed out that the same numeric references, increased by ten, have been used to indicate elements equivalent to those of the central obturator of Figure 1.

This lateral obturator in comprised of a needle (11) joined to a handle by means of a rod (14) that can be broken by turning it several times, as in the case of the central obturator described above. This lateral obturator permits achieving a good lateral seal of the canal very easily, because you only have to introduce the needle (11) with some cement, turning the handle (12) to break the rod (14). In addition, since the needle (11) presents a half-round section, it can be adapted perfectly to the contour of the central obturator, which can much improve the seal.

Despite the fact that reference has been made to a specific performance of the invention, it is evident for an expert in the subject that the described endodontic obturator is capable of numerous variations and modifications, and that all the aforementioned details can be substituted for others that are technically equivalent, without going outside the scope of the protection defined by the attached claims.

## Claims

1. Endodontic obturator, which is comprised of an obturation needle (1; 11), and a handle (2; 12) for positioning the obturator, **characterised by** the fact that this obturation needle (1; 11) and this handle (2; 12) are joined by a breakable rod (4; 14) by turning this rod on its longitudinal axis.

2. Endodontic obturator according to claim 1, **characterised by** the fact that said obturation needle (1) has a locating head (3), placed at the end of the obturation needle (1), in contact with said rod (4).

3. Endodontic obturator according to claim 1, **characterised by** the fact that said handle (2) and said rod (4), comprise a ruler.

4. Endodontic obturator according to any of the above claims, **characterised by** the fact that it is ofpolyamide.

5. Endodontic obturator according to claim 4, **characterised by** the fact that said polyamide contains a load of titanium dioxide.

6. Endodontic obturator according to claim 5, **characterised by** the fact that said polyamide contains a load of barium sulphate.

## Amended claims

### Amended claims under Art. 19.1 PCT

**1.** Endodontic obturator, which is comprised of an obturation needle (1; 11), and a handle (2;12) for positioning the obturator, **characterised by** the fact that this obturation needle (1; 11), and this handle (2; 12) are joined by a breakable rod (4; 14) by turning this rod on the longitudinal axis of the obturator, with the entire system being of the same material and being made in a single piece.

**2.** Endodontic obturator according to claim 1, **characterised by** the fact thst said obturation needle (1) has a locating head (3), placed at the end of the obturation needle and in contact with said rod (4), with a ribbon, preferably 10 millimitres in lenght, projecting laterally form the more coronal or distal part to the tip of the obturation needle.

**3.** Endodontic obturator according to the above claims, **characterised by** being accompanied by non-standard points of lateral condensation, made in a single piece and of the same material as the principal and central point, the secondary lateral points being comprised of a handle (12), a breakable rod (14), so that by turning the handle along its longitudinal axis, it breaks leaving only the secondary lateral needle in the canal and a half-round point of lateral condensation (11), which fits to and encloses perfectly the trunk of the needle of the principal point.

**4.** Endodontic obturator according to any of the above claims, **characterised by** the fact that it is composed of polyamide, preferably comprising 58% of the weight.

**5.** Endodontic obturator according to any of the above claims, **characterised by** the fact that said polyamide contains a load of titanium dioxide, preferably comprising 14% of the weight.

**6.** Endodontic obturator according to any of the above claims, **characterised by** the fact that said polyamide contains a load of barium sulphate, preferably comprising 27% of the weight.

**7.** Endodontic obturator according to any of the above claims, **characterised by** the fact that said polyamide contains a load of ferric oxide, preferably comprising 1% of the weight.

Statement under Art. 19.1 PCT
The actual material for sealing dental roots has been for decades gutta percha loaded normally with waxes, zinc oxide and barium sulphate; this material has three large inconveniences:
it cannot be sterilised by heat because it only resists up to 60° C;
it is very difficult to remove if there is infection, since it does not withstand traction well as it is a very weak rubber, and if a tractor head is used that is not of a material that withstands traction (as occurs in the document DE 202005018748 U1 cited in the international search report), the gutta percha will probably tear because its endurance to traction is almost nil;
it does not seal the root canal well and there can be internal or external infiltration of the canal.

Therefore, in many cases adhesives to the dental root and to the sealing material are being used to improve the seal with gutta percha and cements, because it is much less than perfect.

The way to solve these defects is to look for a polymer that withstands traction, which, in spite of loading it with minerals, does not lose this endurance in order to be able to stretch it and remove it from the canal by means of a head of the same material or a tape stuck to the obturation needle which does not tear when stretched, such as the case of a head of another material introduced in the gutta percha. The polymer that best withstands traction is the polyamide and in addition it can be sterilised by heat, which greatly simplifies the sterilisation, since it endures well at 180° C. The idea is to load it in exact proportions (as proposed in the modified claims 4, 5, 6 and new claim 7) so that it continues to withstand the traction and continues being able to be sterilised, while being, of course, biocompatible. The correct proportions have been tested to achieve a biocompatible and tractional material that can be sterilised at 132° C, is radiopaque and seals the canal well. According to the preliminary tests made, it is biocompatible, seals the canal well, and withstands traction very well without deforming, 180° C in order to be able to sterilise it by heat which is an easy and controllable method, and in these load proportions it continues to withstand traction well.
